# EUROPEAN PATENT APPLICATION

(11) **EP 2 946 704 A1**
(43) Date of publication of application: **25.11.2015**
(21) Application number: 15167142.7
(22) Date of filing: 11.05.2015
(51) Int. Cl.: A47J 31/44

(54) **COFFEE MACHINE**

(30) Priority: 20.05.2014 CN 201410213084
(71) Applicant: Tsann Kuen (Zhangzhou) Enterprise Co., Ltd., Fujian 363107 (CN)
(72) Inventor: Zhong, Weijun, Zhangzhou Fujian 363107 (CN); Yan, Fu, Zhangzhou Fujian 363107 (CN)
(74) Representative: V.O.

(57) **Abstract**

A coffee machine includes: a brewing device (1) operable to generate steam, and including a steam spout (13) that is movable upwardly and downwardly and that is used to deliver the steam generated by the brewing device (1); and a box (4) including a box body (41) configured for containing a liquid to be frothed, and a steam inlet portion (42) disposed on the box body (41). The box body (41) is placed on the brewing device (1) such that the steam inlet portion (42) is disposed below the steam spout (13) to permit entry of the steam exiting the steam spout (13) into the box (4). The steam spout (13) is movable between an engaging position, where the steam spout (13) engages the steam inlet portion (42), and a disengaging position, where the steam spout (13) is disengaged from the steam inlet portion (42).

## Description

This invention relates to a coffee machine, more particularly to a coffee machine including a steam spout that is movable upwardly and downwardly to engage and disengage a box containing a liquid to be frothed.

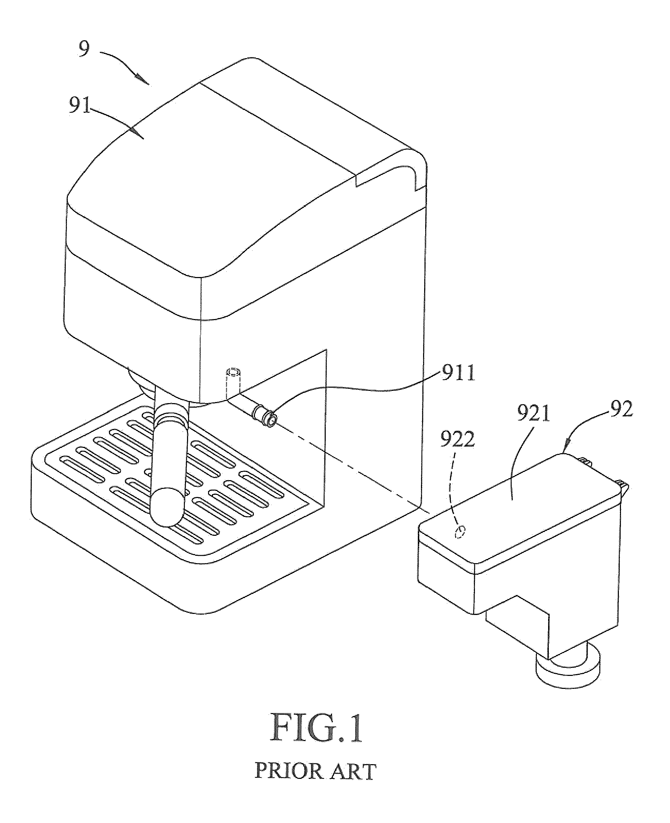

Referring to FIG. 1, a conventional coffee machine 9 includes a brewing device 91 operable to generate steam, and a milk box 92. The brewing device 91 includes a steam spout 911 that is used to deliver the steam generated by the brewing device 91. The milk box 92 includes a box body 921 containing milk to be frothed, and a steam inlet portion 922 that is formed on a side wall of the box body 921, that is horizontally aligned with the steam spout 911 of the brewing device 91, and that serves to permit entry of the steam exiting the steam spout 911 of the brewing device 91 into the box body 921.

During operation, the steam enters into the box body 921 of the milk box 92 and heats the milk to form a soft, creamy froth.

When placing the milk box 92 on the brewing device 91, the steam spout 911 of the brewing device 91 needs to be accurately aligned with the steam inlet portion 922 of the milk box 92 such that the steam spout 911 engages the steam inlet portion 922. However, since the steam spout 911 and the steam inlet portion 922 are not large in size, alignment between them is not easy to achieve. Therefore, installation of the milk box 92 on the brewing device 91 is somewhat inconvenient.

In addition, due to the horizontal aligning configuration between the steam spout 911 of the brewing device 91 and the steam inlet portion 922 of the milk box 92, a sudden jet force created by the steam may result in shaking or removal of the milk box 92, and the leaking steam may cause injury to a user, thereby creating safety concerns.

Therefore, an object of the present invention is to provide a coffee machine that is easy to operate and safe to use.

According to the present invention, a coffee machine includes a brewing device and a box. The brewing device is operable to generate steam, and includes a steam spout that is movable upwardly and downwardly and that is used to deliver the steam generated by the brewing device. The box includes a box body configured for containing a liquid to be frothed, and a steam inlet portion disposed on the box body. The box body is placed on the brewing device such that the steam inlet portion is disposed below the steam spout to permit entry of the steam exiting the steam spout into the box.The steam spout is movable between an engaging position, where the steam spout engages the steam inlet portion, and a disengaging position, where the steam spout is disengaged from the steam inlet portion.

Other features and advantages of the present invention will become apparent in the following detailed description of the embodiment of this invention, with reference to the accompanying drawings, of which:
FIG. 1 is a perspective view of a conventional coffee machine;
FIG. 2 is a perspective view of an embodiment of a coffee machine according to the present invention;
FIG. 3 is a fragmentary perspective view of the embodiment, illustrating a steam spout connected to an operating device;
FIG. 4 is a fragmentary side view of the embodiment, illustrating the steam spout at a disengaging position;
FIG. 5 is a fragmentary partly sectional view of the embodiment when the steam spout is at the disengaging position;
FIG. 6 is a fragmentary side view similar to FIG.4, but illustrating the steam spout at an engaging position;
FIG. 7 is a fragmentary partly sectional view of the embodiment when the steam spout is at the engaging position; and
FIG. 8 is a perspective view illustrating a variation of a retaining unit of the embodiment.

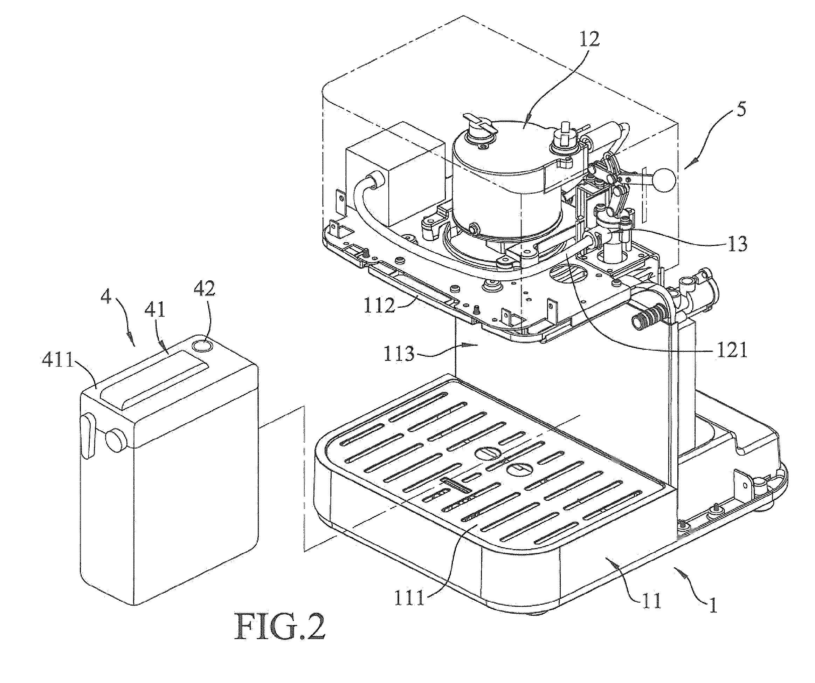

Referring to FIGS. 2 to 4, the embodiment of a coffee machine according to the present invention is shown to include a brewing device 1, a box 4 that is placed on the brewing device 1, and an operating device 5.

The brewing device 1 is operable to generate steam in a conventional manner, and includes a housing 11, a steam-generating unit 12 and a steam spout 13.

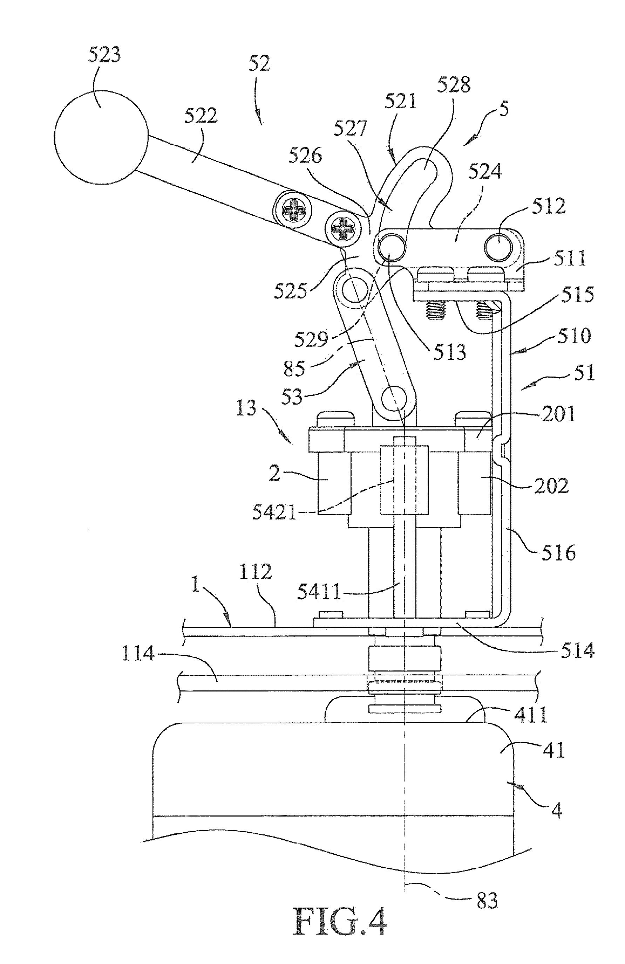

The housing 11 has a lower housing portion 111, an upper housing portion 112 that is vertically spaced apart from the lower housing portion 111 and that cooperates with the lower housing portion 111 to confine a space 113 for accommodating the box 4 therein, and an abutting component 114 (see FIG. 4). The abutting component 114 is disposed under the upper housing portion 112 of the housing 11 and is for arresting shaking of the box 4. To be more specific, the abutting component 114 is disposed between the upper housing portion 112 of the housing 11 and the box 4 and abuts against the box 4 to arrest shaking of the box 4 so that the box 4 is stably disposed in the space 113 of the housing 11. In this embodiment, the abutting component 114 is made of a plastic material.

In practice, the brewing device 1 may further include a grinder (not shown) for grinding coffee beans, a water supply unit (not shown) for providing water, a filter (not shown), etc. Since configurations of the grinder, the water supply unit and the filter are not features of the present invention, further details of the same will not be provided herein for the sake of brevity.

The steam-generating unit 12 is used to heat water to generate steam, is disposed in the upper housing portion 112 of the housing 11, and has a flexible soft pipe 121 that is connected to the steam spout 13for delivering the steam into the steam spout 13. In practice, the steam-generating unit 12 may further include a water container (not shown), a heater (not shown), a pump (not shown), etc. Since configurations of the water container, the heater and the pump are not features of the present invention, further details of the same will not be provided herein for the sake of brevity.

Referring to FIGS. 2 to 5, the steam spout 13 of the brewing device 1 is movable upwardly and downwardly, is used to deliver the steam generated by the brewing device 1, and is configured to direct the steam to exit therefrom downwardly. The steam spout 13 has a shell unit 2 and a control valve 3.

In this embodiment, the shell unit 2 is formed by vertically assembling a first shell 201 and a second shell 202 that is vertically aligned with the first shell 201. In other embodiments, the first shell 201 may also be horizontally assembled with the second shell 202. The shell unit 2 has a shell wall 21 confining a steam passage 23 and a valve seat 22.

The shell wall 21 has a first shell wall portion 211 that extends vertically, and a second shell wall portion 212 that extends horizontally from a top end of the first shell wall portion 211 and that is connected to the flexible soft pipe 121 of the steam-generating unit 12.

The steam passage 23 of the shell wall 21 has a first segment 231 that extends vertically and a second segment 232 that extends horizontally from a top end of the first segment 231 and that is in spatial communication with the first segment 231. To be specific, the first shell wall portion 211 and the second shell wall portion 212 of the shell wall 21 confine the first segment 231 and the second segment 232 of the steam passage 23, respectively.

The valve seat 22 of the shell wall 21 extends from an inner surface 210 of the shell wall 21 into the steam passage 23 of the shell wall 21, is configured as a ring, and has a valve opening 221.

The control valve 3 of the steam spout 13 is disposed in the steam passage 23 and is for controlling flow of the steam through the steam passage 23 into the box 4. The control valve 3 has a spring-loaded valve stem 31 that passes through the valve opening 221 and a seal component 32 that is disposed on an end of the spring-loaded valve stem 31. The spring-loaded valve stem 31 has a stem portion 311 that extends through the valve opening 221 of the valve seat 22, a flange 312 that extends radially from the stem portion 311 and that is formed with at least one steam-passing hole 314, a neck portion 313 that is connected to a top end of the stem portion 311 and that has the seal component 32 disposed thereon, and a resilient component 33 that is sleeved on the stem portion 311 and that has opposite ends abutting against the valve seat 22 of the shell unit 2 and the flange 312, respectively. In this embodiment, the seal component 32 is configured as an O-ring. The flange 312 extends radially from a bottom end of the stem portion 311 and has two spaced-apart steam-passing holes 314. It should be noted that the number of the steam-passing holes 314 of the flange 312 is not limited to two and may vary based on actual requirements. In this embodiment, the resilient component 33 is a compression spring.

The resilient component 33 generates a restoring force to push the stem portion 311 downwardly so that the seal component 32 blocks the valve opening 221 of the valve seat 22, thereby preventing the steam in the second segment 232 of the steam passage 23 from entering into the first segment 231 of the steam passage 23.

The box 4 is disposed between the abutting component 114 and the lower housing portion 111 of the housing 11 and includes a box body 41 configured for containing a liquid to be frothed, and a steam inlet portion 42 disposed on the box body 41. In this embodiment, the box 4 contains milk.

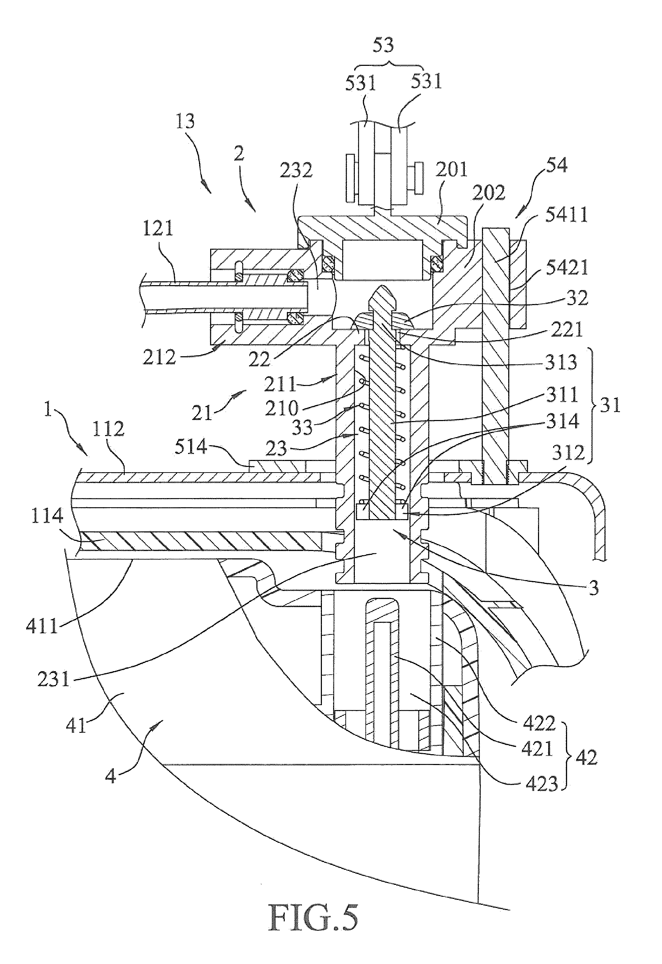

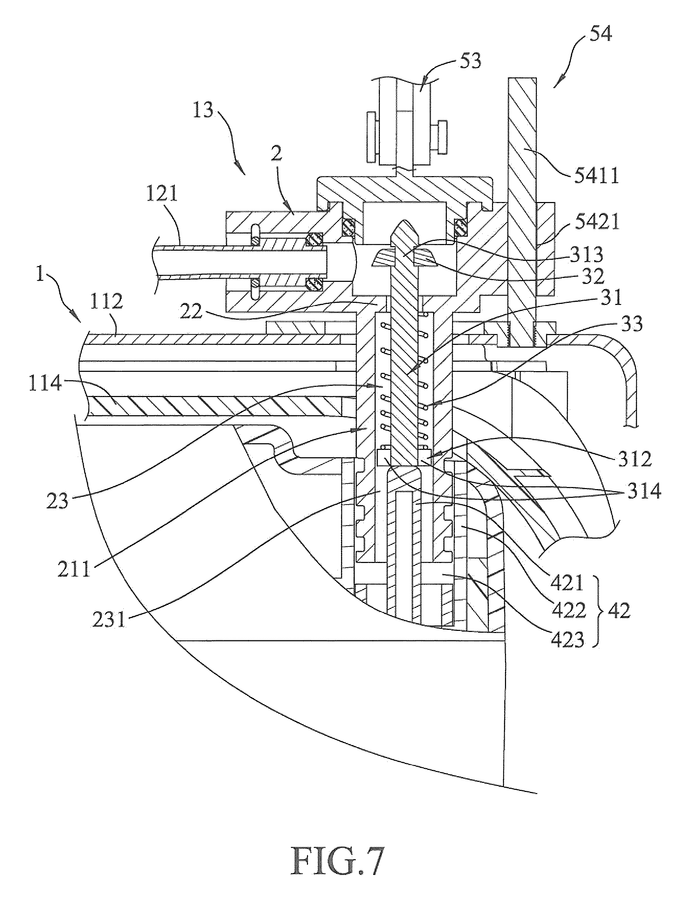

The box body 41 is placed on the brewing device 1 such that the steam inlet portion 42 is disposed below the steam spout 13 of the brewing device 1 to permit entry of the steam exiting the steam spout 13 into the box 4. The steam spout 13 is movable between an engaging position (see Fig. 7), where the steam spout 13 engages the steam inlet portion 42, and a disengaging position (see Fig. 5), where the steam spout 13 is disengaged from the steam inlet portion 42. In this embodiment, the box body 41 has a top wall 411 provided with the steam inlet portion 42. Since feature of the present invention does not reside in the specific construction of the box body 41, further details of the same will not be provided herein.

The steam inlet portion 42 has an insert pole 421 that extends vertically and a surrounding wall 422 that extends from the box body 41 and that surrounds the insert pole 421. The insert pole 421 extends into the steam passage 23 and the surrounding wall 422 surrounds the shell wall 21 of the shell unit 2 when the steam spout 13 of the brewing device 1 is at the engaging position. The insert pole 421 cooperates with the surrounding wall 422 to confine a steam inlet hole 423 in spatial communication with the box body 41. In this embodiment, the steam inlet portion 42 of the box 4 is vertically aligned with the steam spout 13 of the brewing device 1. The insert pole 421 extends into the first segment 231 of the steam passage 23. The steam inlet hole 423 is annular and engages the first shell wall portion 211 of the shell wall 21.

The box 4 abuts against the abutting component 114 and the lower housing portion 111 of the housing 11 so that the box 4 is securely retained to avoid upward and downward movement thereof. Accordingly, the steam spout 13 of the brewing device 1 may firmly couple with the steam inlet portion 42 of the box 4 to enhance safety during use.

The operating device 5 is connected to the steam spout 13 and is operable to drive movement of the steam spout 13between the engaging position and the disengaging position. The operating device 5 includes a frame unit 51, a lever unit 52, a link unit 53 and a retaining unit 54.

The frame unit 51 is disposed on the upper housing portion 112 of the housing 11 of the brewing device 1 and has a frame 510, at least one fastening component 511 that is disposed on the frame 510, a pivot shaft 512 that is disposed on the fastening component 511, and a retaining shaft 513 that is spaced apart from the pivot shaft 512 and that is disposed on the fastening component 511. In this embodiment, the number of the fastening component 511 is two, and the two fastening components 511 are spaced apart from each other. Moreover, both of the pivot shaft 512 and the retaining shaft 513 are retained on the two fastening components 511 using chips.

The frame 510 of the frame unit 51 has a bottom wall portion 514 through which the steam spout 13 movably extends, a top wall portion 515 that is vertically spaced apart from the bottom wall portion 514 and that has the fastening component 511 disposed thereon, and a side wall portion 516 that interconnects the top wall portion 515 and the bottom wall portion 514. In this embodiment, a cross-section of the frame 510 is substantially C-shaped. The link unit 53 is connected pivotally to and is disposed between the lever unit 52 and the steam spout 13. The lever unit 52 is operable to move the link unit 53 to drive movement of the steam spout 13 between the engaging position and the disengaging position. In this embodiment, the lever unit 52 has a swingable component 521 that is connected to the link unit 53, a knob 523 that is spaced apart from the swingable component 521, and a connecting component 522 that interconnects the swingable component 521 and the knob 523. The swingable component 521, the connecting component 522 and the knob 523 may be formed as one piece.

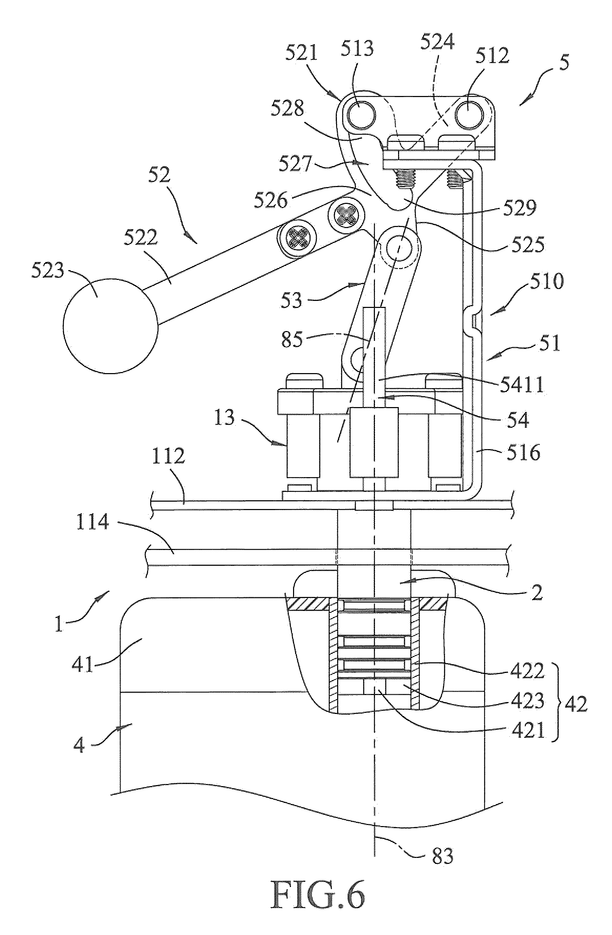

The swingable component 521 has a first pivoting portion 524 connected pivotally to the pivot shaft 512 of the frame unit 51, a second pivoting portion 525 connected pivotally to the link unit 53, a retaining portion 526 that interconnects the first pivoting portion 524 and the second pivoting portion 525 and that is connected to the connecting component 522 of the lever unit 52, and a retaining groove 527 that is formed in the retaining portion 526, that has the retaining shaft 513 of the frame unit 51 passing therethrough, and that has opposite first and second ends 528, 529. When the steam spout 13 is at the engaging position, the retaining shaft 513 is located at the first end 528 of the retaining groove 527, as best shown in Fig. 6. When the steam spout 13 is at the disengaging position, the retaining shaft 513 is located at the second end 529 of the retaining groove 529, as best shown in Fig. 4. In this embodiment, the retaining groove 527 extends along an arc. A distance of the second pivoting portion 525 to the second end 529 of the retaining groove 527 is shorter than that of the second pivoting portion 525 to the first end 528 of the retaining groove 527.

The link unit 53 of the operating device 5 has at least one link member 531 that is connected to the second pivoting portion 525 of the swingable component 521. In this embodiment, the number of the link member 531 is two, and the link members 531 are spaced apart from each other. The second pivoting portion 525 of the swingable component 521 is retained on the two link members 531 using chips.

The retaining unit 54 of the operating device 5 includes a male component 541 provided on one of the frame 510 and the steam spout 13 of the brewing device 1, and a female component 542 provided on the other one of the frame 510 and the steam spout 13 of the brewing device 1. The male component 541 slidably engages the female component 542 to guide upward and downward movement of the steam spout 13 relative to the frame 510 of the frame unit 51. Therefore, the steam spout 13 of the brewing device 1 cannot move horizontally, allowing the steam spout 13 of the brewing device 1 to firmly couple with the steam inlet portion 42 of the box 4. It should be noted that the number of the retaining unit 54 is not limited to one and may vary based on actual requirements.

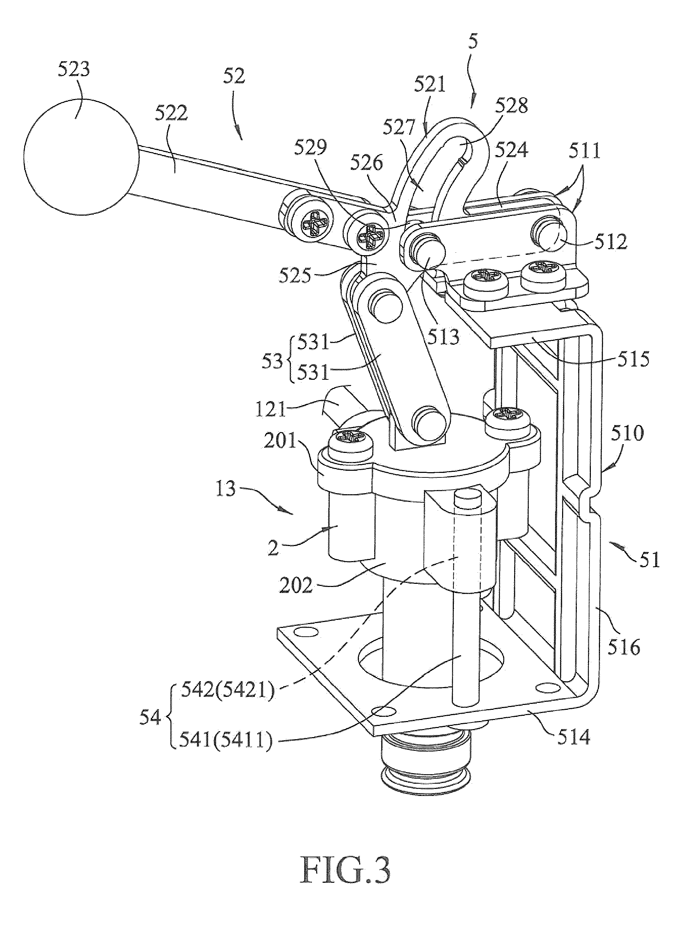

Referring to FIG. 3, the steam spout 13 is provided with a through hole 5421 that serves as the female component 542 of the retaining unit 54. The male component 541 of the retaining unit 54 is a retaining rod 5411 that extends upwardly from the bottom wall portion 514 of the frame 510 and that passes through the through hole 5421 provided on the shell wall 21 such that the steam spout 13 of the brewing device 1 is movable only along the retaining rod 5411.

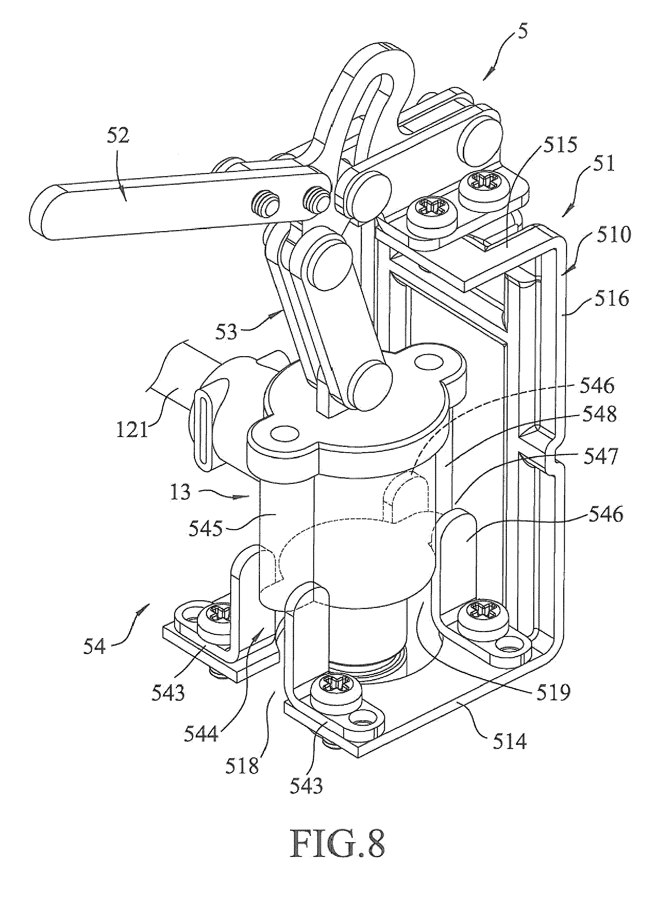

FIG. 8 shows a variation of the retaining unit 54 of this embodiment. In the variation, two male components of the retaining unit 54 are a first retaining pole 545 and a second retaining pole 548 that are symmetrically provided on the steam spout 13 of the brewing device 1 and that respectively pass through a first opening 518 and a second opening 519 symmetrically provided on the bottom wall portion 514 of the frame 510. The first opening 518 and the second opening 519 serve as the female components of the retaining unit 54.

In order to restrict horizontal movement of the steam spout 13 of the brewing device 1, the retaining unit 54 of the operating device 5 further includes two L-shaped first retaining components 543 and two L-shaped second retaining components 546 that are symmetrically provided on the bottom wall portion 514 of the frame 510. The first retaining components 543 cooperate to confine a first channel 544 that is in spatial communication with the first opening 518. The second retaining components 546 cooperate to confine a second channel 547 that is in spatial communication with the second opening 519. Restricted by the first and second retaining components 543, 546, the first and second retaining poles 545, 548 can only respectively pass through the first and second channels 544, 547 to slidably and accurately engage the first and second openings 518, 519, respectively.

Referring to FIGS. 4 to 7, the lever unit 52 of the operating device 5 brings the link unit 53 to drive movement of the steam spout 13 of the brewing device 1 between the engaging position (see FIG. 6) and the disengaging position (see FIG. 4).

When the lever unit 52 of the operating device 5 is moved upward, the steam spout 13 of the brewing device 1 is moved to one of the engaging position and the disengaging position. On the other hand, when the lever unit 52 of the operating device 5 is moved downward, the steam spout 13 of the brewing device 1 is moved to the other one of the engaging position and the disengaging position. In addition, when the steam spout 13 of the brewing device 1 is at the engaging position, the retaining shaft 513 of the frame unit 51 is located at one of the first end 528 and the second end 529 of the retaining groove 527. Furthermore, when the steam spout 13 of the brewing device 1 is at the disengaging position, the retaining shaft 513 of the frame unit 51 is located at the other one of the first end 528 and the second end 529 of the retaining groove 527.

In this embodiment, the lever unit 52 of the operating device 5 is moved downward such that the retaining shaft 513 of the frame unit 51 and the steam spout 13 of the brewing device 1 are respectively moved to the first end 528 and the engaging position when liquid (for example, milk) is to be frothed in the box body 41 of the box 4. Moreover, the lever unit 52 of the operating device 5 is moved upward such that the retaining shaft 513 of the frame unit 51 and the steam spout 13 of the brewing device 1 are respectively moved to the second end 529 and the disengaging position when frothing is finished or when the box 4 is to be removed from the brewing device 1.

It is worthwhile to mention that, referring to FIG. 6, due to the extension of the retaining groove 527 of the swingable component 521 along an arc, when the lever unit 52 of the operating device 5 is moved downward, the second end 529 of the retaining groove 527 is moved toward the side wall portion 516 of the frame 510 of the frame unit 51 such that an axis 83 of the steam spout 13 forms an angle with a longitudinal direction 85 of the link unit 53, while the link unit 53 is also inclined with respect to the axis 83 and a top end of the link unit 53 is moved toward the side wall portion 516 of the frame 510. At this time, when a sudden jet force is created by the steam, a recoil caused by the steam drives upward movement of the steam spout 13 such that the angle becomes larger. However, the retaining shaft 513 of the frame unit 51 resists a swing of the swingable component 521, thereby preventing the angle from becoming larger, and thus the steam spout 13 is no longer movable upward and firmly engages the steam inlet portion 42 of the box 4.

To froth the liquid in the box body 41 of the box 4, the steam spout 13 is moved to the engaging position, and the insert pole 421 of the steam inlet portion 42 of the box 4 extends into the first segment 231 of the steam passage 23 and pushes the spring-loaded valve stem 31 of the control valve 3 so that the seal component 32 of the control valve 3 is moved to unblock the valve opening 221 of the valve seat 22. Therefore, the steam generated by the steam-generating unit 12 of the brewing device 1 passes through the flexible soft pipe 121 of the steam-generating unit 12, flows into the steam passage 23 of the steam spout 13, and exits the steam spout 13 to enter into the box body 41 of the box 4.

When the steam spout 13 is moved to the disengaging position, the spring-loaded valve stem 31 of the control valve 3 brings the seal component 32 of the control valve 3 to block the valve opening 221 of the valve seat 22, causing the steam to stop flowing into the first segment 231 of the steam passage 23. The box 4 may be removed from the brewing device 1 at this time.

To sum up, the coffee machine of this invention includes a brewing device 1 with a steam spout 13 that is movable upwardly and downwardly, and an operating device 5 that drives movement of the steam spout 13 between an engaging position and a disengaging position such that alignment between the steam spout 13 and a steam inlet portion 41 of a box 4 is made easier, enhancing convenience of installation of the box 4 on the brewing device 1. In addition, due to a vertical alignment of the steam spout 13 and the steam inlet portion 42, shaking of the box 4 caused by a sudden jet force created by the steam may be prevented and the box 4 is more stably retained on the brewing device 1, thereby providing a coffee machine that is safer to use and easier to operate.

## Claims

1. A coffee machine, **characterized by**:
a brewing device (1) operable to generate steam, and including a steam spout (13) that is movable upwardly and downwardly and that is used to deliver the steam generated by said brewing device (1); and
a box (4) including a box body (41) configured for containing a liquid to be frothed, and a steam inlet portion (42) disposed on said box body (41), said box body (41) being placed on said brewing device (1) such that said steam inlet portion (42) is disposed below said steam spout (13) to permit entry of the steam exiting said steam spout (13) into said box (4);
wherein said steam spout (13) is movable between an engaging position, where said steam spout (13) engages said steam inlet portion (42), and a disengaging position, where said steam spout (13) is disengaged from said steam inlet portion (42).

2. The coffee machine as claimed in claim 1, **characterized in that** said steam spout (13) has a shell unit (2) that has a shell wall (21) confining a steam passage (23), said steam inlet portion (42) having an insert pole (421) that extends vertically and a surrounding wall (422) that extends from said box body (41) and that surrounds said insert pole (421), said insert pole (421) extending into said steam passage (23) and said surrounding wall (422) surrounding said shell wall (21) when said steam spout (13) is at the engaging position, said insert pole (421) cooperating with said surrounding wall (422) to confine a steam inlet hole (423) in spatial communication with said box body (41).

3. The coffee machine as claimed in claim 2, **characterized in that** said steam spout (13) further has a control valve (3) that is disposed in said steam passage (23) and that is for controlling flow of the steam through said steam passage (23) and into said box (4).

4. The coffee machine as claimed in claim 3, **characterized in that** said steam passage (23) of said shell wall (21) has a first segment (231) that extends vertically,
said shell unit (2) further having a valve seat (22) that extends from said shell wall (21) into said steam passage (23) and that has a valve opening (221),
said control valve (3) having a spring-loaded valve stem (31) that passes through said valve opening (221) and a seal component (32) that is disposed on an end of said spring-loaded valve stem (31),
when said steam spout (13) is being moved to the engaging position, said insert pole (421) of said steam inlet portion (42) extending into said first segment (231) and pushing said spring-loaded valve stem (31) so that said seal component (32) is moved to unblock said valve opening (221),
when said steam spout (13) is being moved to the disengaging position, said spring-loaded valve stem (31) bringing said seal component (32) to block said valve opening (221).

5. The coffee machine as claimed in claim 4, **characterized in that** said spring-loaded valve stem (31) has a stem portion (311), a flange (312) that extends radially from said stem portion (311) and that is formed with at least one steam-passing hole (314), a neck portion (313) that is connected to a top end of said stem portion (311) and that has said seal component (32) disposed thereon, and a resilient component (33) that is sleeved on said stem portion (311) and that has opposite ends abutting against said valve seat (22) and said flange (312), respectively.

6. The coffee machine as claimed in claim 2, **characterized in that** said brewing device (1) further includes a housing (11) that has a lower housing portion (111), and an upper housing portion (112)that is vertically spaced apart from said lower housing portion (111) and that cooperates with said lower housing portion (111) to confine a space (113) for accommodating said box (4) therein, said housing (11) further having an abutting component (114) that is disposed under said upper housing portion (112) of said housing (11) and that is for arresting shaking of said box (4).

7. The coffee machine as claimed in claim 1, further **characterized by** an operating device (5) connected to said steam spout (13) and operable to drive movement of said steam spout (13) between the engaging position and the disengaging position.

8. The coffee machine as claimed in claim 7, **characterized in that** said operating device (5) includes a lever unit (52) and a link unit (53) that is connected pivotally to and that is disposed between said lever unit (52) and said steam spout (13), said lever unit (52) being operable to move said link unit (53) to drive movement of said steam spout (13) between the engaging position and the disengaging position.

9. The coffee machine as claimed in claim 8, **characterized in that** said operating device (5) further includes a frame unit (51) that is disposed on said brewing device (1) and that has a pivot shaft (512),
said lever unit (52) of said operating device (5) having a swingable component (521) that has a first pivoting portion (524) connected pivotally to said pivot shaft (512), and a second pivoting portion (525) connected pivotally to said link unit (53).

10. The coffee machine as claimed in claim 9,
**characterized in that** said frame unit (51) further has a retaining shaft (513) that is spaced apart from said pivot shaft (512),
said swingable component (521) further having a retaining portion (526) that interconnects said first pivoting portion (524) and said second pivoting portion (525), and a retaining groove (527) that is formed in said retaining portion (526), that has said retaining shaft (513) passing therethrough, and that has opposite first and second ends (528, 529),
when said steam spout (13) is at the engaging position, said retaining shaft (513) being located at said first end (528) of said retaining groove (527), and when said steam spout (13) is at the disengaging position, said retaining shaft (513) being located at said second end (529) of said retaining groove (527).

11. The coffee machine as claimed in claim 10,
**characterized in that** said retaining groove (527) extends along an arc, a distance of said second pivoting portion (525) to said second end (529) of said retaining groove (527) being shorter than that of said second pivoting portion (525) to said first end (528) of said retaining groove (527).

12. The coffee machine as claimed in claim 9, **characterized in that** said operating device (5) further includes a retaining unit (54) that includes a male component (541) provided on one of said frame unit (51) and said steam spout (13), and a female component provided on the other one of said frame unit (51) and said steam spout (13), said male component (541) slidably engaging said female component (542) to guide upward and downward movement of said steam spout (13) relative to said frame unit (51).

13. The coffee machine as claimed in claim 12, **characterized in that** said frame unit (51) of said operating device (5) further has a frame (510), and at least one fastening component (511) that is disposed on said frame (510) and that has said pivot shaft (512) disposed thereon,
said frame (510) having a bottom wall portion (514) through which said steam spout (13) movably extends, and a top wall portion (515) that is vertically spaced apart from said bottom wall portion and that has said fastening component (511) disposed thereon.

14. The coffee machine as claimed in claim 13,
**characterized in that** said steam spout (13) is provided with a through hole (5421) that serves as said female component (542) of said retaining unit (54), and said male component (541) of said retaining unit (54) is a retaining rod (5411) that extends upwardly from said bottom wall portion (514) of said frame (510) and that passes through said through hole (5421) such that said steam spout (13) of said brewing device (1) is movable along said retaining rod (5411).

15. The coffee machine as claimed in claim 1,
**characterized in that** said steam spout (13) is configured to direct the steam to exit therefrom downwardly, and said box body (41) has a top wall (411) provided with said steam inlet portion (42), said steam inlet portion (42) being vertically aligned with said steam spout (13).
